# EUROPÄISCHE PATENTSCHRIFT

(11) **EP 3 178 764 B1**
(45) Veröffentlichungstag und Bekanntmachung des Hinweises auf die Patenterteilung: **13.06.2018**
(21) Anmeldenummer: 16002571.4
(22) Anmeldetag: 02.12.2016
(51) Int. Cl.: B65G 47/14, B65G 47/24, B65G 47/88

(54) **VERFAHREN UND VORRICHTUNG ZUM BEREITSTELLEN ROLLBARER SCHEIBENFÖRMIGER BAUTEILE**
METHOD AND APPARATUS FOR PROVIDING ROLLABLE DISC-SHAPED COMPONENTS
PROCÉDÉ ET DISPOSITIF DE FOURNITURE DE COMPOSANTS EN FORME DE DISQUE SUR ROULETTES

(30) Priorität: 10.12.2015 DE 102015015992
(43) Veröffentlichungstag der Anmeldung: 14.06.2017
(73) Patentinhaber: Kolbus GmbH & Co. KG, 32369 Rahden (DE)
(72) Erfinder: Hodde, Sven, 49080 Osnabrück (DE); Ugorets, Leonid, 32369 Rahden (DE)

(56) Entgegenhaltungen:
- FR-A1- 2 317 964
- JP-A- H11 348 917
- JP-A- 2000 133 991
- US-A1- 2002 000 360

## Beschreibung

Die vorliegende Erfindung betrifft ein Verfahren zum Bereitstellen rollbarer scheibenförmiger Bauteile nach dem Oberbegriff des Anspruchs 1.

Bekannte Systeme, welche rollbare scheibenförmige Bauteile einzeln in einer vorgegebenen Position bereitstellen, umfassen Einrichtungen, welche die Bauteile zunächst aus einem ungeordneten Vorrat in einlagige Reihen überführen, aus denen dann die Vereinzelung und Bereitstellung erfolgt. Dazu umfassen solche Systeme Führungselemente, welche die Orientierung und die Position der vereinzelten Bauteile zu deren Bereitstellung festlegen, damit aber gleichzeitig auch die Zugänglichkeit des Bauteils in seiner Bereitstellungsposition einschränken. Dies wiederum erfordert mehrdimensionale Bewegungen zur Überführung der Bauteile aus ihrer Bereitstellungsposition auf bzw. in ein dieses aufnehmende Vorprodukt.

Aus der FR 2 317 964 ist ein Verfahren nach dem Oberbegriff des Anspruchs 1 und eine Vorrichtung zum stückweisen kontaktlosen Abtrennen ferromagnetischer Teile von einem Teilestrom bekannt. Dabei werden über eine Rinne die zu vereinzelnden Bauteile als einlagige Reihe zugeführt. In Verlängerung dieser Rinne ist ein geradliniger Förderkanal einer Vereinzelungseinrichtung aus den speziell geformten Polschuhen eines Magneten gebildet. Auf ihrem Weg von der Rinne zu einer sich am Ende des Förderkanals befindlichen Bereitstellungsposition werden die Teile als Reihe durch diesen Förderkanal befördert. Dabei werden die Teile durch das Magnetfeld um eine quer zu der Transportrichtung verlaufende Achse ein erstes Mal um 90° gedreht und vor Erreichen der Bereitstellungsposition ein zweites Mal um 90° um diese mitbewegte Achse quer zu der Transportrichtung gedreht. Am Ende des durch den Magneten gebildeten Kanales wird jeweils eines der Bauteile durch das Magnetfeld in der Bereitstellungsposition gehalten. Es ist daher Aufgabe der vorliegenden Erfindung, ein gegenüber dem Stand der Technik verbessertes Verfahren zu schaffen, welche zumindest einen der Nachteile des Standes der Technik überwindet.

Die Erfindung löst die Aufgabe durch ein Verfahren mit den Merkmalen des Patentanspruchs 1. Vorteilhafte Weiterbildungen der Erfindung sind durch die in den Unteransprüchen angegebenen Merkmale gekennzeichnet.

Dazu ist ein Reservoir vorgesehen, in welchem die rollbaren scheibenförmigen Bauteile bevorratet werden. Diese Bauteile weisen jeweils zwei im wesentlichen ebene und zueinander parallele Stirnflächen und eine zwischen diesen Stirnflächen angeordnete Mantelfläche auf. Um die Beschickung zu vereinfachen, kann die Bevorratung in ungeordneter Form erfolgen, bspw. in einem

Trommelförderer, welcher eine Sortiereinrichtung umfasst, um jeweils aus einer Teilmenge des ungeordneten Vorrats eine einlagige Reihe rollbarer scheibenförmiger Bauteile zu bilden.

An das Reservoir schließt sich eine Zufuhreinrichtung an, welche die einlagige Reihe Bauteile einer Bereitstellungsposition nachführt und so eine von der Bereitstellungsposition weitgehend unabhängige Anordnung des Reservoirs und insbesondere dessen Beschickungsöffnung ermöglicht. Bei einer Anordnung des Reservoirs oberhalb der Bereitstellungsposition kann die Zufuhreinrichtung aufgrund der Rollfähigkeit der Bauteile als einfache Führung gestaltet sein und insbesondere auf angetriebene Transportmittel verzichten.

Weiterhin ist eine Vereinzelungseinrichtung vorgesehen, welche verhindert, dass sich gleichzeitig mehrere Bauteile aus der einlagigen Reihe in der Bereitstellungsposition befinden. Die rollbaren scheibenförmigen Bauteile sind derart aus magnetisierbarem Material gebildet, dass sie in einem Magnetfeld eine Kraft erfahren, insbesondere, dass jeweils eines der Bauteile, welches vollständig aus der Zufuhreinrichtung ausgetreten ist, von einem Magnetfeld der Vorrichtung wenigstens zeitweise in der Bereitstellungsposition gehalten wird. Damit ist es möglich, das Bauteil ohne mechanisch wirkende Elemente in seiner Bereitstellungsposition zu halten und damit eine Behinderung der Zugänglichkeit des Bauteils zu vermeiden. Darüber hinaus unterstützt das Magnetfeld die Zuführung der Bauteile in die Bereitstellungsposition und steigert damit die Funktionssicherheit der Vorrichtung. Zur Erzeugung dieses Magnetfeldes umfasst die Vorrichtung zumindest einen Magneten, welcher aus einem Elektromagneten und/oder einem Permanentmagneten gebildet sein kann.

Vorzugsweise ist der Auslassöffnung der Zufuhreinrichtung, aus welcher die Bauteile in die Bereitstellungsposition austreten, gegenüberliegend ein die Bereitstellungsposition in der Zufuhrrichtung der Bauteile begrenzender Anschlag vorgesehen, an welchem das jeweils aus der Zufuhreinrichtung ausgetretene Bauteil anliegt. Durch diese einseitige mechanische Begrenzung der Bereitstellungsposition können die Anforderungen an das das bereitgestellte Bauteil haltende Magnetfeld unter Aufrechterhaltung der Positioniergenauigkeit des Bauteils erheblich vereinfacht werden.

Vorteilhaft ist ein inhomogenes Magnetfeld, dessen räumliche Änderung der magnetischen Flussdichte in unterschiedlicher Richtung verschieden ist. Von besonderer Bedeutung ist dabei eine in den zur Zufuhrrichtung der Bauteile aus der Zufuhreinrichtung orthogonalen Richtungen ausgeprägt unterschiedliche räumliche Änderung der Flussdichte. Vollständig aus der Auslassöffnung der Zufuhreinrichtung ausgetretene Bauteile werden sich so stets derart ausrichten, dass die Flächennormale der Stirnflächen parallel zur der Richtung der größten Änderung der magnetischen Flussdichte orientiert ist. Damit ist die Orientierung der Bauteile in der Bereitstellungsposition unabhängig von der Orientierung der Auslassöffnung, da sich die Bauteile jeweils allein aufgrund des Magnetfeldes in der gewünschten Weise ausrichten, wodurch sich zusätzliche konstruktive Freiheiten der Zufuhreinrichtung und insbesondere deren Auslassöffnung ergeben. Erfindungsgefäß, ist jedoch die Auslassöffnung zu der Orientierung der Bauteile in deren Bereitstellungsposition um die Zufuhrrichtung gedreht angeordnet, so dass sich jedes Bauteil unmittelbar nach dessen Verlassen der Auslassöffnung gemäß des Magnetfeldes um die Zufuhrrichtung dreht. Diese Drehung verhindert auch bei sehr dünnen Bauteilen die unerwünschte gleichzeitige Bereitstellung mehrer zueinander geschichteter Bauteile zuverlässig ohne die Zugänglich der Bereitstellungsposition durch zusätzliche Führungen zu behindern. Darüber hinaus ist eine lediglich ungefähre Anpassung des Abstandes zwischen der Auslassöffnung einerseits und dem die Bereitstellungsposition in Zufuhrrichtung begrenzenden Anschlag andererseits an die Größe der Bauteile erforderlich. Die Vereinzelung der Bauteile aus der einlagigen Reihe erfolgt dabei durch das jeweils zu vereinzelnde Bauteil selbst durch dessen Drehung um die Zufuhrrichtung. Für eine bestmögliche Funktionssicherheit der Vereinzelung ist eine Drehung der Bauteile um 90° vorzusehen und damit die Auslassöffnung orthogonal zu der Ausrichtung der Bauteile in der Bereitstellungsposition zu orientieren.

In vorteilhafter Weise hat das sich in der Bereitstellungsposition befindliche rollbare scheibenförmige Bauteil eine erste Kontaktfläche mit dem diesem nachfolgenden Bauteil durch welche die Drehachse der durch das Magnetfeld erzeugten Drehung des Bauteils in der Bereitstellungsposition verläuft. Indem auch der Fluss des Magnetfeldes durch diese Kontaktfläche verläuft, wird die

Drehachse des Bauteils zusätzlich stabilisiert, wodurch sich auch die Funktionssicherheit erhöht.

Vorteilhaft ist eine Anpassung der Auslassöffnung an die Dicke der Bauteile derart, dass ein Drehen oder Kippen der Bauteile um die Zufuhrrichtung verhindert wird, solange das jeweils austretende Bauteil die Zufuhreinrichtung noch nicht vollständig verlassen hat, ohne das Nachführen innerhalb der Zufuhreinrichtung zu behindern.

Vorzugsweise ist das Magnetfeld derart ausgeprägt, dass es eine Zentrierung des Bauteils in der Bereitstellungsposition durch Rollen auf dem Anschlag bewirkt. In einfacher Weise ist dazu der Magnet der Vorrichtung aus einem Paket geschichteter Einzelmagnete unterschiedlicher Abmessungen gebildet. Als besonders vorteilhaft hat sich dazu eine Schichtung länglicher Magnetscheiben, welche die Drehung der Bauteile um deren Zufuhrrichtung bewirken und quadratischer oder runder Magnetscheiben, welche die Zentrierung in der Bereitstellungsposition bewirken erwiesen, wobei die Schmalseite der länglichen Magnetscheiben etwa dem Durchmesser der runden bzw. der Kantenlänge der quadratischem Magnetscheiben entspricht. So kann das vorgeschlagene Magnetfeld allein mit handelsüblichen Permanentmagneten erzeugt werden, was eine einfache und kostengünstige Konstruktion ermöglicht.

Der Abstand des die Bereitstellungsposition begrenzenden Anschlags zu der Auslassöffnung aus der Zufuhreinrichtung ist dabei größer als der einfache Durchmesser der bereitzustellenden Bauteile und kleiner als deren doppelter Durchmesser. Vorteilhafter Weise umfasst die Vorrichtung eine Zustelleinrichtung, durch die dieser Abstand veränderbar ist, um die Vorrichtung unterschiedlichen Größen rollbarer scheibenförmiger Bauteile anzupassen oder auch um die Bereitstellungsposition auf einfache Weise in Größenordnung der Bauteile verändern zu können.

Zum Bestücken von Vorprodukten mit rollbaren scheibenförmigen Bauteilen schließt sich an eine solche Bereitstellung der Bauteile deren Überführung aus der Bereitstellungsposition in eine Abgabeposition auf das bzw. in dem Vorprodukt an, wozu eine Überführungseinrichtung vorgesehen ist.

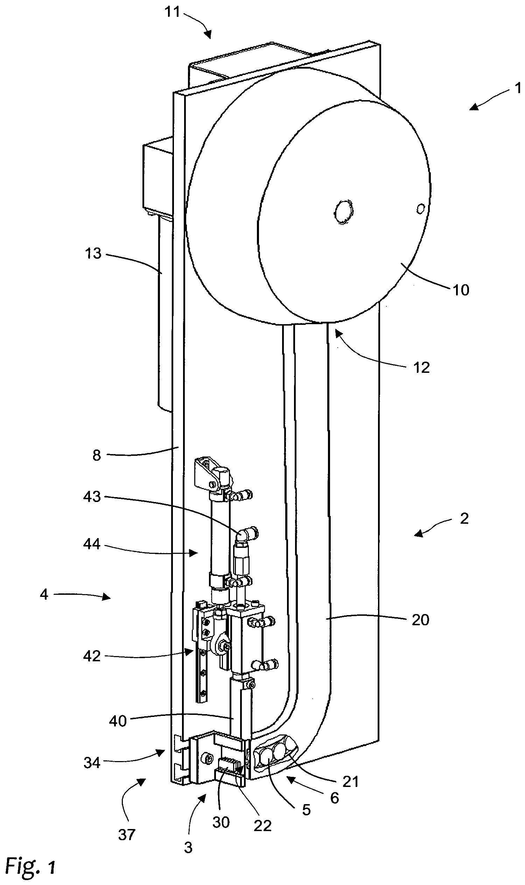

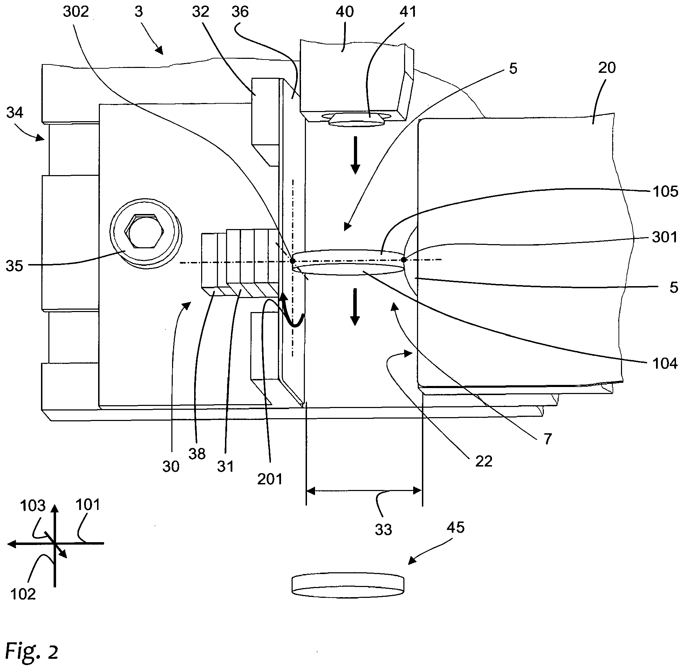

Diese Überführungseinrichtung umfasst einen Schieber, welcher das in der Bereitstellungsposition befindliche Bauteil erfasst, in die Abgabeposition überführt und dort freigibt. Vorteilhaft ist eine Bewegungsbahn dieses Schiebers, von einer Startposition in eine der Abgabeposition des Bauteils entsprechenden Endposition, auf welcher die Bereitstellungsposition des Bauteils durchfahren wird. Damit wird eine besonders zeitsparende lineare Bewegung des Schiebers und damit eine hohe Leistung der Vorrichtung möglich. Eine besonders leistungsfähige Vorrichtung ergibt sich bei einer Anordnung der Bereitstellungsposition in geringem Abstand oberhalb der Abgabeposition, so dass der zurückzulegende Weg sehr kurz ist und das Bauteil allein durch die Gewichtskraft ohne weitere Positionsveränderung in seiner Abgabeposition verbleibt. Der Schieber selbst verschließt die Auslassöffnung der Zufuhreinrichtung, sobald er von seiner Startposition kommen die Bereitstellungsposition erreicht und bis er wieder in seine Startposition zurückkehrend die Bereitstellungsposition passiert hat. Dabei wird auf einen zusätzlichen Mechanismus verzichtet, der ein unbeabsichtigtes Verlassen der Auslassöffnung durch in der Zufuhreinrichtung nachfolgende Bauteile verhindert. Die Funktionssicherheit der Überführungseinrichtung wird durch einen in dem Schieber angeordneten Sauger weiter gesteigert, welcher vorzugsweise mit einem Unterdruck beaufschlagt ist, wenn der Schieber auf das in seiner Bereitstellungsposition befindliche Bauteil trifft und drucklos oder mit Druckluft beaufschlagt ist, wenn das Bauteil seine Abgabeposition erreicht hat. Eine beispielhafte Ausführungsform des erfindungsgemäßen Verfahrens wird anhand der Figuren detailliert beschrieben. Es zeigen:**Fig. 1**in perspektivischer Darstellung eine Vorrichtung zum Bereitstellen von und zum Bestücken von Vorprodukten mit rollbaren scheibenförmigen Bauteilen; **Fig. 2**in perspektivischer Darstellung einen Ausschnitt einer Vorrichtung zum Bereitstellen rollbarer scheibenförmiger Bauteile.

Die in Fig. 1 gezeigte Vorrichtung ist auf einem Gestell in Form einer Grundplatte 8 aufgebaut, so dass sie als kompakte Einheit in unterschiedlichen Maschinen einsetzbar ist. Das ungeordnete Reservoir ist als Trommelförderer 1 ausgebildet und wird über einen Einfüllstutzen 11 mit den rollbaren scheibenförmigen Bauteilen 5 beschickt. Diese Beschickung kann wahlweise manuell oder mittels einer nicht dargestellten Einrichtung automatisiert aus einem Großgebinde erfolgen. Die Trommel 10 des Trommelförderers dient als Vorratsbehälter und wird über einen Antrieb 13 in Rotation versetzt. In ihrem Inneren weist die Trommel 10 im Bereich ihrer Auslassöffnung 12 Leitelemente auf, welche im Zusammenspiel mit der Rotation der Trommel 10 die ungeordneten Bauteile 5 in eine einlagige Reihe 6 überführen, welche über eine Zufuhreinrichtung 2 zu einer Bereitstellungsposition 7 transportiert wird.

Die Zufuhreinrichtung 2 weist eine die einlagige Reihe 6 aufnehmende und leitende Führung 21 auf, welche die Ordnung dieser Reihe 6 während des Transportes der magnetisierbaren Bauteile 5 von dem Trommelförderer 1 zu der Vereinzelungseinrichtung 3 aufrecht erhält. In Produktflussrichtung betrachtet weist die Führung 21 zunächst einen vertikalen Verlauf auf, bevor sie über einen Bogen in einer schlitzförmigen Auslassöffnung 22 mit horizontaler Zufuhrrichtung 101 mündet. Aufgrund ihrer Länge kann die Zufuhreinrichtung eine Vielzahl rollbarer scheibenförmiger Bauteile 5 aufnehmen und dient somit als Puffer 20, welcher kurzfristige Förderunterbrechungen des Trommelförderers 1 ausgleichen kann. Die Führung 21 ist derart gestaltet, dass sie die Gewichtskraft und die Rollfähigkeit der Bauteile 5 nutzt, indem diese in dem Bogenstück und der Auslassöffnung 22 auf ihren Mantelflächen 105 rollen, durch welche sie in aufrecht stehender Ausrichtung mit den orthogonal zur Zufuhrrichtung 101 und horizontal orientierten Normalen ihrer Stirnflächen 104 die Zufuhreinrichtung 2 verlassen.

Wie in Fig. 2 gezeigt ist in Zufuhrrichtung 101 betrachtet zu der Auslassöffnung 22 der Zufuhreinrichtung 2 beabstandet ein Anschlag 36 der Vereinzelungseinrichtung 3 angeordnet. Der Abstand 33 ist dabei etwas größer gewählt als der Durchmesser der Bauteile 5, so dass jeweils nur ein einzelnes Bauteil 5 in der Bereitstellungsposition 7 vorhanden ist, welche sich zwischen der Auslassöffnung 22 der Zufuhreinrichtung 2 und dem Anschlag 36 der Vereinzelungseinrichtung 3 befindet.

Der Anschlag 36 ist blechförmig ausgebildet, an dessen der Bereitstellungsposition 7 abgewandter Seite ist der Magnet 30 angeordnet. Dieser ist aus einem Paket geschichteter scheibenförmiger Permanentmagnete 31, 38 gebildet, deren Pole in Zufuhrrichtung 101 betrachtet alternierend angeordnet sind. Das Paket besteht aus unterschiedlich dimensionierten Einzelmagneten, wobei eine erste rechteckige Bauform ein deutlich von 1 abweichendes Seitenverhältnis aufweist. Diese länglichen Einzelmagnete 31 sind mit ihren langen Seiten horizontal ausgerichtet und bilden den der Bereitstellungsposition zugewandten Teil des Magneten 30. Auf diese Weise wird ein Magnetfeld erzeugt, welches das Bauteil 5 horizontal ausrichtet. Das aufrecht rollend aus der Auslassöffnung 22 austretende Bauteil 5 wird allein aufgrund des wirkenden Magnetfeldes um den Winkel 201 gedreht, wobei die Rotation um die Zufuhrrichtung 101 erfolgt. Entsprechend der in Fig. 2 gezeigten Anordnung der Auslassöffnung 22 und der Einzelmagnete länglicher Bauart 31 beträgt der Drehwinkel 201 90°. Die Drehrichtung kann dabei variieren und ist unerheblich.

Der Teil des Magneten 30, welcher der Bereitstellungsposition 7 abgewandt ist, ist aus einem Stapel quadratischer Einzelmagnete 38 gebildet. Diese sind mittig auf den länglichen Einzelmagneten 31 angeordnet und ihre Kantenlänge entspricht der Schmalseite der länglichen Einzelmagneten 31. Die quadratischen Einzelmagnete 38 verstärken die zentrierende Wirkung des Magnetfeldes auf das Bauteil 5 in der Bereitstellungsposition 7.

Das auf diese Weise in der Bereitstellungsposition 7 gehaltene Bauteil 5 versperrt die Auslassöffnung 22 für die in der Zufuhreinrichtung 2 in der einlagigen Reihe 6 nachfolgenden weiteren Bauteile 5. Die zueinander orthogonale Ausrichtung der beiden in Fig. 2 gezeigten Bauteile 5, von denen sich das erste in der Bereitstellungsposition 7 befindet, verhindert zuverlässig ein seitliches Abgleiten der nachfolgenden Bauteile 5 und damit eine unkontrollierte Stapelbildung von Bauteilen 5 in der Bereitstellungsposition 7.

Das in der Bereitstellungsposition 7 befindliche Bauteil 5 hat eine erste Kontaktfläche 301 gemeinsam mit seinem nachfolgenden Bauteil 5 und eine zweite Kontaktfläche 302 gemeinsam mit dem Anschlag 36 der Vereinzelungseinrichtung 3. Der magnetische Fluss durch diese beiden Kontaktflächen 301, 302 stabilisiert die Drehachse der durch das Magnetfeld erzeugten Drehung des Bauteils 5 und trägt damit zu einer wiederholgenauen und präzisen Positionierung des Bauteils 5 in der Bereitstellungsposition 7 bei.

Zur Veränderung der Bereitstellungsposition 7 und der Anpassung des Abstandes 33 des Anschlags 36 zur Auslassöffnung 22 an den Durchmesser der Bauteile 5, ist der Anschlag 36 gemeinsam mit dem Magnet 30 durch einen Halter 32 mit einer Zustelleinrichtung 37 verbunden. Die gezeigte Zustelleinrichtung umfasst eine Linearführung 34 und eine Klemmung 35, um die Position des Anschlags 36 festzusetzen. Alternativ kann für besonders präzise Einstellungen ein nicht dargestellter Spindeltrieb ergänzt werden.

Oberhalb der Bereitstellungsposition 7 und an der gemeinsamen Grundplatte 8 angeordnet ist eine Überführungseinrichtung 4, welche das sich in der Bereitstellungsposition 7 befindliche Bauteil 5 erfasst und in eine Abgabeposition 45 verbringt. Diese Abgabeposition 45 befindet sich unterhalb der Bereitstellungsposition 7 auf oder in einem das Bauteil aufnehmenden nicht dargestellten Vorprodukt wie bspw. einer für einen Magnetverschluss vorbereiteten Schachteldecke.

Die Überführungseinrichtung 4 umfasst einen Schieber 40, welcher über eine Linearführung 42 linear beweglich angeordnet ist. In der gemäß Fig. 2 der Bereitstellungsposition 7 zugewandten Seite des Schiebers 40 ist ein Sauger 41 angeordnet, welcher über eine Saugleitung 43 mit einem nicht dargestellten Vakuumerzeuger verbunden ist. Der Sauger 41 dient der sicheren Fixierung des Bauteils 5 am Schieber 40 während der Überführung von der Bereitstellungsposition 7 in die Abgabeposition 45.

Der Schieber 40 durchfährt in einer oberen Endlage startend linear die Bereitstellungsposition 7, nimmt dabei das bereitgestellte Bauteil 5 mithilfe des Saugers 41 auf und schiebt das Bauteil 5 gegen die wirkende Magnetkraft aus der Bereitstellungsposition 7 in die Abgabeposition 45. Nach der dort erfolgten Freigabe des Bauteils 5 fährt der Schieber 40 wiederum durch die Bereitstellungsposition 7 in seine Startposition zurück. Der Schieber 40 ist säulenförmig ausgebildet, wobei seine Länge derart bemessen ist, dass er noch in seiner unteren Endlage die Bereitstellungsposition 7 versperrt und das Nachführen der Reihe 6 durch die Auslassöffnung 22 verhindert, bis er eine Lage oberhalb der Bereitstellungsposition 7 erreicht hat.

Betätigt wird der Schieber 40 durch einen Antrieb 44 aus zwei in Reihe geschaltete Pneumatikzylinder. Ein erster Zylinder verschiebt dabei den Schieber aus seiner oberen Endlage derart bis zur Bereitstellungsposition 7, dass der Sauger 41 sicher auf dem Bauteil 5 aufsetzt. Sobald das Bauteil 5 durch das Vakuum am Sauger 41 fixiert ist, verbringt ein zweiter Zylinder des Antriebs 44 den Schieber 40 in seine untere Endlage und damit das Bauteil 5 in die Abgabeposition 45. Alternativ können auch nicht dargestellte andere Antriebe eingesetzt werden, welche ebenfalls zweistufig oder auch einstufig arbeiten.

## Patentansprüche

1. **Verfahren** zum Bereitstellen von rollbaren im wesentlichen scheibenförmigen Bauteilen (5) mit zwei im wesentlichen ebenen und zueinander im wesentlichen parallelen Stirnflächen (104) und einer zwischen diesen Stirnflächen (104) angeordneten Mantelfläche (105) in einer Bereitstellungsposition (7), wenigstens umfassend die Schritte
• Bevorraten einer Mehrzahl gleichartiger rollbarer im wesentlichen scheibenförmiger Bauteile (5) in einem Reservoir (1),
• Ausbilden einer einlagigen Reihe (6) aus den bevorrateten Bauteilen (5) durch eine Einrichtung zum Ausrichten von in dem Reservoir (1) bevorrateten Bauteilen (5), wobei die Stirnflächen (104) wenigstens der in der einlagigen Reihe (6) angeordneten Bauteile (5) im wesentlichen parallel zu der Erstreckungsrichtung der einlagigen Reihe (6) orientiert sind,
• Zuführen der einlagigen Reihe (6) zu einer Vereinzelungseinrichtung (3) durch eine Zufuhreinrichtung (2) mit einer der Vereinzelungseinrichtung (3) zugewandten und nur für einzelne rollbare im wesentlichen scheibenförmige Bauteile (5) durchgängige Auslassöffnung (22), wobei wenigstens das sich jeweils in der Auslassöffnung (22) befindliche Bauteil (5) mit seinen Stirnflächen (104) im wesentlichen parallel zu einer ersten Richtung (101) orientiert ist, in welcher die Bauteile (5) aus der Auslassöffnung (22) der Zufuhreinrichtung (2) austreten, wobei
• die rollbaren im wesentlichen scheibenförmigen Bauteile (5) im wesentlichen aus magnetisierbarem Material bestehen und
• die Vereinzelungseinrichtung (3) wenigstens temporär ein von einem Magneten (30) erzeugtes Magnetfeld aufweist, welches ein vollständig durch die Auslassöffnung (22) der Zufuhreinrichtung (2) ausgetretenes Bauteil (5) in der Bereitstellungsposition (7) hält.
**dadurch gekennzeichnet, dass**
sich das Bauteil (5) unmittelbar nach dessen Verlassen der Auslassöffnung (22) gemäß des Magnetfeldes um die Zuführrichtung (101) dreht, so dass das von dem Magnetfeld in seiner Bereitstellungsposition (7) gehaltene Bauteil (5) in einer gegenüber der Austrittsöffnung (22) um die erste Richtung (101), in welcher die Bauteile (5) durch die Austrittsöffnung (22) austreten, um einen Winkel (201) gedrehten Ebene orientiert ist.

2. Verfahren nach Anspruch 1, **dadurch gekennzeichnet, dass** der Drehwinkel (201) etwa 90° beträgt.

3. Verfahren nach einem der vorhergehenden Ansprüche, **dadurch gekennzeichnet, dass** die Kraftwirkung des von dem Magneten (30) erzeugten Magnetfeldes die Drehung des Bauteils (5) um den Drehwinkel (201) nach dessen Verlassen der Austrittsöffnung (22) der Zufuhreinrichtung (2) bewirkt.

4. Verfahren nach einem der vorhergehenden Ansprüche, **gekennzeichnet durch** eine Kontaktstelle (301) des sich in der Bereitstellungsposition (7) befindenden Bauteils (5) mit dem diesem nachfolgenden Bauteil (5) durch welche die Drehachse der durch das Magnetfeld erzeugten Drehung des Bauteils (5) in der Bereitstellungsposition verläuft.

5. Verfahren nach einem der vorhergehenden Ansprüche, **dadurch gekennzeichnet, dass** das Bauteil (5) jeweils nach dessen Verlassen der Austrittsöffnung (22) durch die Kraftwirkung des von dem wenigstens einen Magneten (30) erzeugten magnetischen Feldes quer zu seiner Zufuhrrichtung (101) in der Bereitstellungsposition (7) zentriert wird.

6. Verfahren nach Anspruch 4, **dadurch gekennzeichnet, dass** das Bauteil (5) zum Zentrieren in der Bereitstellungsposition (7) aufgrund des Magnetfeldes mit seiner Mantelfläche (105) an einem der Austrittsöffnung (22) gegenüberliegenden und die Bereitstellungsposition (7) in Zufuhrrichtung (101) begrenzende Anschlag (36) in einer zu der Zufuhrrichtung (101) im wesentlichen orthogonalen Richtung (103) abwälzt.

7. Verfahren nach einem der vorhergehenden Ansprüche, **dadurch gekennzeichnet, dass** das vollständig durch die Auslassöffnung (22) der Zufuhreinrichtung (2) ausgetretene Bauteil (5), welches mittels von einem Magneten erzeugten Magnetfeld in der Bereitstellungsposition gehalten wird, von einem Schieber (40) erfasst wird, der die Bereitstellungsposition (7) in einer von der Zufuhrrichtung (101) abweichenden zweiten Richtung (102) durchfährt, das erfasste Bauteil (5) in eine Abgabeposition (45) verbringt und dort frei gibt.

8. Verfahren nach Anspruch 7, **dadurch gekennzeichnet, dass** der das Bauteil (5) von der Bereitstellungsposition (7) in die Abgabeposition (45) überführende Schieber (40) die Auslassöffnung (22) der Zufuhreinrichtung (2) verschließt, während er sich zwischen der Bereitstellungsposition (7) und der Abgabeposition (45) befindet.

## Claims

1. A **method** for providing rollable and essentially disc-shaped components (5) with two essentially plane and essentially parallel end faces (104) and a curved surface area (105) arranged between these end faces (104) in a pick-up position (7), with said method at least comprising the steps of
• storing a plurality of identical rollable and essentially disc-shaped components (5) in a reservoir (1),
• forming a single-layer row (6) of the stored components (5) by means of a device for aligning the components (5) stored in the reservoir (1), wherein the end faces (104) of at least the components (5) arranged in the single-layer row (6) are essentially oriented parallel to the direction, in which the single-layer row (6) extends, and
• feeding the single-layer row (6) to a separating device (3) by means of a feed device (2) with an outlet opening (22), which faces the separating device (3) and is only passable for individual rollable and essentially disc-shaped components (5), wherein at least the respective component (5) located in the outlet opening (22) is oriented essentially parallel to a first direction (101), in which the components (5) exit the outlet opening (22) of the feed device (2), with its end faces (104), wherein
• the rollable and essentially disc-shaped components (5) essentially consists of magnetizable material and
• the separating device (3) at least temporarily features a magnetic field, which is generated by a magnet (30) and holds a component (5) that has completely exited the outlet opening (22) of the feed device (2) in the pick-up position (7),
**characterized in that** the component (5) rotates about the feed direction (101) in accordance with the magnetic field immediately after it exits the outlet opening (22) such that the component (5), which is held in its pick-up position (7) by the magnetic field, is oriented in a plane that is rotated relative to the outlet opening (22) about the first direction (101), in which the components (5) exit the outlet opening (22), by an angle (201).

2. The method according to claim 1, **characterized in that** the rotational angle (201) amounts to approximately 90°.

3. The method according to one of the preceding claims, **characterized in that** the force effect of the magnetic field generated by the magnet (30) causes the rotation of the component (5) by the rotational angle (201) after it exits the outlet opening (22) of the feed device (2).

4. The method according to one of the preceding claims, **characterized by** a contact point (301) between the component (5) located in the pick-up position (7) and the following component (5), wherein the axis of the rotation of the component (5), which is caused by the magnetic field, extends through said contact point in the pick-up position.

5. The method according to one of the preceding claims, **characterized in that** the respective component (5) is after exiting the outlet opening (22) centered transverse to its feed direction (101) in the pick-up position (7) due to the force effect of the magnetic field generated by the at least one magnet (30).

6. The method according to claim 4, **characterized in that** the component (5) rolls on a stop (36), which lies opposite of the outlet opening (22) and defines the pick-up position (7) in the feed direction (101), with its curved surface area (105) in a direction (103) extending essentially orthogonal to the feed direction (101) in order to center the component in the pick-up position (7) due to the magnetic field.

7. The method according to one of the preceding claims, **characterized in that** the component (5), which has completely exited the outlet opening (22) of the feed device (2) and is held in the pick-up position by means of the magnetic field generated by a magnet, is captured by a slide (40) that passes through the pick-up position (7) in a second direction (102), which deviates from the feed direction (101), transfers the captured component (5) into a delivery position (45) and releases the component in this delivery position.

8. The method according to claim 7, **characterized in that** the slide (40), which transfers the component (5) from the pick-up position (7) into the delivery position (45), closes the outlet opening (22) of the feed device (2) while it is located between the pick-up position (7) and the delivery position (45).

## Revendications

1. **Procédé** destiné à mettre à disposition des éléments constitutifs (5) roulants, sensiblement en forme de disques, avec deux surfaces frontales (104) sensiblement planes et sensiblement parallèles l'une à l'autre et une surface d'enveloppe (105) placée entre lesdites surfaces frontales (104) dans une position de mise à disposition (7), comprenant au moins les étapes
• du stockage d'une pluralité d'éléments constitutifs (5) roulants, sensiblement en forme de disques de même type dans un réservoir (1),
• de la création d'une rangée (6) en une couche des éléments constitutifs (5) stockés par un système destiné à aligner des éléments constitutifs (5) stockés dans le réservoir (1), les surfaces frontales (104) d'au moins les éléments constitutifs (5) placés dans la rangée (6) en une couche étant orientées sensiblement à la parallèle de la direction d'extension de la rangée (6) en une couche,
• de l'alimentation de la rangée (6) en une couche vers un système de désolidarisation (3) par un système d'alimentation (2) avec une ouverture de sortie (22) faisant sensiblement face au système de désolidarisation (3) et ne laissant passer que des éléments constitutifs (5) roulants, sensiblement en forme de disques individuels, au moins l'élément constitutif (5) se trouvant respectivement dans l'ouverture de sortie (22) étant orienté par ses surfaces frontales (104) sensiblement à la parallèle d'une première direction (101) dans laquelle les éléments constitutifs (5) sortent de l'ouverture de sortie (22) du système d'alimentation (2),
• les éléments constitutifs (5) roulants, sensiblement en forme de disques étant constitués sensiblement en une matière magnétisable et
• le système de désolidarisation (3) comportant au moins temporairement un champ magnétique créé par un aimant (30), lequel tient un élément constitutif (5) complètement sorti par l'ouverture de sortie (22) du système d'alimentation (2) dans la position de mise à disposition (7),
**caractérisé en ce que** directement après avoir quitté l'ouverture de sortie (22), l'élément constitutif (5) tourne conformément au champ magnétique autour de la direction d'alimentation (101), de sorte que l'élément constitutif (5) maintenu par le champ magnétique dans sa position de mise à disposition (7) soit orienté dans un plan tourné par rapport à l'ouverture de sortie (22) autour de la première direction (101), dans laquelle les éléments constitutifs (5) sortent de l'ouverture de sortie (22) de la valeur d'un angle (201).

2. Procédé selon la revendication 1, **caractérisé en ce que** l'angle de rotation (201) est d'environ 90°.

3. Procédé selon l'une quelconque des revendications précédentes, **caractérisé en ce que** l'effet de force du champ magnétique créé par l'aimant (30) provoque la rotation de l'élément constitutif (5) autour de l'angle de rotation (201), après qu'il ait quitté l'ouverture de sortie (22) du système d'alimentation (2).

4. Procédé selon l'une quelconque des revendications précédentes, **caractérisé par** un point de contact (301) entre l'élément constitutif (5) se trouvant dans la position de mise à disposition (7) avec l'élément constitutif (5) qui le suit, par lequel l'axe de rotation de la rotation de l'élément constitutif (5) créée par le champ magnétique s'écoule dans la position de mise à disposition.

5. Procédé selon l'une quelconque des revendications précédentes, **caractérisé en ce que** chaque fois après avoir quitté l'ouverture de sortie (22), l'élément constitutif (5) est centré à la transversale de sa direction d'alimentation (101) dans la position de mise à disposition (7) par l'effet de la force du champ magnétique créé par l'au moins un aimant (30).

6. Procédé selon la revendication 4, **caractérisé en ce que** pour le centrage dans la position de mise à disposition (7), du fait du champ magnétique, l'élément constitutif (5) se déroule par sa surface d'enveloppe (105) sur une butée (36) située en vis-à-vis de l'ouverture de sortie (22) et délimitant la position de mise à disposition (7) dans la direction d'alimentation (101) dans une direction (103) sensiblement orthogonale à la direction d'alimentation (101).

7. Procédé selon l'une quelconque des revendications précédentes, **caractérisé en ce que** l'élément constitutif (5) complètement sorti par l'ouverture de sortie (22) du système d'alimentation (2), lequel au moyen d'un champ magnétique créé par un aimant est maintenu dans la position de mise à disposition est saisi par un coulisseau (40) qui traverse la position de mise à disposition (7) dans une deuxième direction (102) divergente de la direction d'alimentation (101), qui amène l'élément constitutif (5) dans une position de distribution (45) et le libère dans cette dernière.

8. Procédé selon la revendication 7, **caractérisé en ce que** le coulisseau (40) qui fait passer l'élément constitutif (5) de la position de mise à disposition (7) dans la position de distribution (45) ferme l'ouverture de sortie (22) du système d'alimentation (2) pendant qu'il se trouve entre la position de mise à disposition (7) et la position de distribution (45).
